# FASCICULE DE BREVET EUROPEEN

(11) **EP 3 397 875 B1**
(45) Date de publication et mention de la délivrance du brevet: **24.06.2020**
(21) Numéro de dépôt: 17705118.2
(22) Date de dépôt: 14.02.2017
(51) Int. Cl.: F16F 15/14

(54) **DISPOSITIF D'AMORTISSEMENT**
DÄMPFUNGSVORRICHTUNG
DAMPING DEVICE

(30) Priorité: 22.02.2016 FR 1651416
(43) Date de publication de la demande: 07.11.2018
(73) Titulaire: Valeo Embrayages, 80009 Amiens Cedex 2 (FR)
(72) Inventeur: MARECHAL, Olivier, 80009 Amiens (FR)
(74) Mandataire: Cardon, Nicolas
(86) Numéro de dépôt international: PCT/EP2017/053273
(87) Numéro de publication internationale: WO 2017/144309

(56) Documents cités:
- DE-A1-102008 013 865
- GB-A- 2 361 509
- US-A- 1 641 230

## Description

La présente invention concerne un dispositif d'amortissement, notamment pour un système de transmission de véhicule automobile.

Dans une telle application, le dispositif d'amortissement peut être intégré à un système d'amortissement de torsion d'un embrayage apte à relier sélectivement le moteur thermique à la boîte de vitesses. En variante, dans une telle application, le dispositif d'amortissement peut être intégré à un disque de friction de l'embrayage ou à un convertisseur de couple hydrodynamique.

Un tel dispositif d'amortissement peut être utilisé pour filtrer les vibrations dues aux acyclismes du moteur et/ou les vibrations générées dans la zone de l'embrayage et se manifestant dans la chaîne cinématique du véhicule lors de la phase de glissement de l'embrayage.

Il est connu d'utiliser un dispositif d'amortissement présentant une fréquence de résonance fixe et indépendante de la vitesse du moteur thermique, un tel dispositif étant encore appelé batteur. La demande WO 2011/060752 divulgue un batteur intégré dans un disque de friction. Ce batteur comprend un composant primaire définissant une pluralité de dents primaires faisant radialement saillie vers l'extérieur, et un composant secondaire, mobile en rotation autour d'un axe par rapport au composant primaire contre une force de rappel élastique, et définissant une pluralité de dents secondaires faisant radialement saillie vers l'intérieur. Le batteur divulgué par cette demande WO 2011/060752 comprend encore une pluralité d'organes de rappel élastique, chaque dent primaire et chaque dent secondaire interagissant avec deux de ces organes de rappel élastique.

Le batteur selon WO 2011/060752 est relativement complexe et onéreux à réaliser.

Le document DE 10 2008 013 865 A1 montre toutes les caractéristiques du préambule de la revendication 1.

Il existe un besoin pour amortir les oscillations de torsion et/ou les vibrations générées dans la zone de l'embrayage et se propageant dans un système de transmission de véhicule automobile à l'aide d'un dispositif peu coûteux et simple à réaliser.

L'invention vise à répondre à tout ou partie de ce besoin et elle y parvient, selon l'un de ses aspects, à l'aide d'un dispositif d'amortissement à fréquence de résonance fixe, le dispositif étant apte à être intégré dans un composant d'un système de transmission de véhicule de manière à être disposé hors du chemin emprunté par le couple transmis par ledit composant, le dispositif comprenant:
- un composant primaire définissant une pluralité de dents primaires faisant radialement saillie vers l'extérieur,
- un composant secondaire, mobile en rotation autour d'un axe par rapport au composant primaire contre une force de rappel élastique, et définissant une pluralité de dents secondaires faisant radialement saillie vers l'intérieur,
- une pluralité d'organes de rappel élastique exerçant la force de rappel élastique, chaque organe de rappel élastique présentant une extrémité primaire en appui contre une dent primaire et une extrémité secondaire en appui contre une dent secondaire,
chaque dent primaire et chaque dent secondaire interagissant avec au plus un organe de rappel élastique.

Dans le dispositif d'amortissement selon l'invention, il n'existe plus de dent primaire ou de dent secondaire interagissant simultanément avec deux organes de rappel élastique.

L'interaction entre dent primaire, respectivement secondaire, et organe de rappel élastique peut correspondre à un appui direct ou à un appui indirect, par exemple via une coupelle de centrage. Le nombre de ces organes de rappel élastique peut ainsi être réduit, de sorte que le coût induit par la présence du dispositif d'amortissement diminue, sans pour autant affecter la capacité du dispositif d'amortissement à filtrer des oscillations de torsion, par exemple celles dues aux acyclismes du moteur thermique du véhicule, ou à filtrer les vibrations générées dans la zone de l'embrayage et se manifestant dans la chaîne cinématique d'un véhicule lors de la phase de glissement de l'embrayage, ces vibrations étant encore appelées « broutement ».

Chaque organe de rappel élastique peut s'étendre circonférentiellement entre son extrémité primaire et son extrémité secondaire.

Le dispositif d'amortissement présente une fréquence de résonance fixe, indépendante de la vitesse de rotation du moteur thermique de propulsion du véhicule. Un tel dispositif est encore appelé « batteur », étant différent d'un pendule. Le batteur peut permettre de remédier aux problèmes de broutement.

La fréquence de résonance du batteur est par exemple comprise entre 6 Hz et 14 Hz, notamment entre 8 Hz et 12 Hz. Une telle fréquence de résonance est particulièrement adaptée pour remédier aux problèmes de broutement.

Le composant secondaire joue le rôle d'une masse de filtrage. Le composant secondaire peut s'étendre majoritairement radialement extérieurement par rapport au composant primaire. Le composant secondaire peut être monobloc.

Le composant primaire est par exemple solidaire d'un élément du composant du système de transmission, par exemple un moyeu, tandis que le composant secondaire n'est alors relié à rien d'autre qu'au composant primaire, cette liaison s'effectuant via les organes de rappel élastique, le composant secondaire est aussi par exemple centré radialement par le composant primaire.

L'organe de rappel élastique est par exemple un ressort, tel qu'un ressort hélicoïdal. Il peut s'agir d'un ressort droit ou d'un ressort courbe.

Au sens de la présente demande :
- « axialement » signifie « parallèlement à l'axe de rotation »,
- « radialement » signifie « perpendiculairement à l'axe de rotation et le long d'un axe coupant cet axe de rotation »,
- « orthoradialement » signifie «perpendiculairement à une direction radiale, dans un plan perpendiculaire à l'axe de rotation »,
- « circonférentiellement » ou « angulairement » signifient tous deux « autour de l'axe de rotation»,
- « deux pièces sont solidaires » signifie qu'elles sont rigidement couplées, sauf lorsqu'il est explicitement précisé de quelle façon ces pièces sont solidaires. Ainsi par exemple, « deux pièces solidaires en rotation » n'indique rien quant à la possibilité ou non d'un mouvement de translation entre ces deux pièces, ces deux options étant alors possibles, et
- « le dispositif d'amortissement est au repos » signifie que ce dispositif est dans une position dans laquelle il peut être soumis à des forces centrifuges mais non à des oscillations de torsion, par exemple issues d'acyclismes du moteur thermique.

Les organes de rappel élastique sont notamment montés en parallèle les uns par rapport aux autres.

Le composant primaire peut définir des dents primaires interagissant avec un seul organe de rappel élastique, et des dents primaires n'interagissant avec aucun organe de rappel élastique, le composant secondaire définissant alors des dents secondaires interagissant avec un seul organe de rappel élastique et des dents secondaires n'interagissant avec aucun organe de rappel élastique.

Chaque dent primaire n'interagissant avec aucun organe de rappel élastique peut être disposée dans un logement dont chaque extrémité circonférentielle est définie par une dent secondaire interagissant avec un seul organe de rappel élastique. Dans ce cas, ledit logement et ladite dent primaire peuvent être configurés de manière à ce que cette dent primaire puisse venir en appui contre au moins une extrémité circonférentielle du logement de manière à définir une position de butée pour le déplacement du composant secondaire par rapport au composant primaire. La dent primaire vient par exemple en appui contre l'extrémité dans le sens trigonométrique du logement pour définir une position de butée pour le déplacement dans le sens non-trigonométrique du composant secondaire par rapport au composant primaire, et cette dent primaire vient en appui contre l'extrémité dans le sens non-trigonométrique du logement pour définir une position de butée pour le déplacement dans le sens trigonométrique du composant secondaire par rapport au composant primaire.

En variante ou en combinaison de ce qui précède, chaque dent secondaire n'interagissant avec aucun organe de rappel élastique peut être disposée dans un logement dont chaque extrémité circonférentielle est définie par une dent primaire interagissant avec un seul organe de rappel élastique. Dans ce cas, ledit logement et ladite dent secondaire peuvent être configurés de manière à ce que cette dent secondaire puisse venir en appui contre au moins une extrémité circonférentielle du logement de manière à définir une position de butée pour le déplacement du composant secondaire par rapport au composant primaire. La dent secondaire vient par exemple en appui contre l'extrémité dans le sens trigonométrique du logement pour définir une position de butée pour le déplacement dans le sens trigonométrique du composant secondaire par rapport au composant primaire, et cette dent secondaire vient en appui contre l'extrémité dans le sens non-trigonométrique du logement pour définir une position de butée pour le déplacement dans le sens non-trigonométrique du composant secondaire par rapport au composant primaire.

Lorsqu'à la fois des dents primaires et des dents secondaires définissent les positions de butée précitées, les efforts entre le composant primaire et le composant secondaire dans ces positions de butée sont mieux répartis. Au total, au moins organes de butée peuvent être définies par les dents primaires et/ou les dents secondaires précitées. Il existe par exemple deux dents secondaires définissant chacune un organe de butée et deux dents primaires définissant chacune un organe de butée.

Chaque dent primaire n'interagissant avec aucun organe de rappel élastique et chaque dent secondaire n'interagissant avec aucun organe de rappel élastique peuvent s'étendre au moins partiellement dans l'espace radial dans lequel s'étend chaque organe de rappel élastique. Chaque organe de rappel élastique s'étend par exemple dans un logement défini circonférentiellement entre une dent primaire et une dent secondaire, et la position radiale d'un logement recevant un organe de rappel élastique peut exactement correspondre à la position radiale d'un logement dans lequel s'étend une dent primaire ou secondaire n'interagissant avec aucun organe de rappel élastique.

Les organes de rappel élastique peuvent être disposés de telle sorte que l'on observe en se déplaçant circonférentiellement autour de l'axe de rotation en alternance :
- un organe de rappel élastique dont l'extrémité dans le sens trigonométrique est en appui contre une dent primaire et dont l'extrémité dans le sens non-trigonométrique est en appui contre une dent secondaire, et
- un organe de rappel élastique dont l'extrémité dans le sens non-trigonométrique est en appui contre une dent primaire et dont l'extrémité dans le sens trigonométrique est en appui contre une dent secondaire.

Ce positionnement inversé des organes de rappel élastique se succédant circonférentiellement permet de pré-contraindre les organes de rappel élastique deux à deux, de sorte que l'on réduit, voire supprime, le jeu entre le composant primaire et le composant secondaire. Dans un exemple particulier, le dispositif d'amortissement ne comprend que quatre organes de rappel élastique, deux organes de rappel élastique se succédant circonférentiellement étant décalés d'un angle mesuré depuis l'axe de rotation sensiblement égal à 90°.

Dans tout ce qui précède, le composant primaire peut comprendre deux parties distinctes. Seule l'une de ces parties du composant primaire définit par exemple les dents primaires. Ainsi, les logements accueillant une dent secondaire ou un organe de rappel élastique ne sont ménagés que dans une seule des parties du composant primaire.

Les deux parties du composant primaire peuvent être solidarisées entre elles par tout moyen, par exemple encliquetage, sertissage ou emmanchement à chaud. Ces deux parties peuvent se succéder axialement.

Dans tout ce qui précède, chaque dent, primaire ou secondaire, peut interagir avec un organe de rappel élastique via une paroi plane de ladite dent.

Chacun du composant primaire et du composant secondaire est par exemple réalisé en plastique ou en zamak.

Dans tout ce qui précède, le dispositif peut comprendre un système de génération d'hystérésis pour le déplacement du composant secondaire par rapport au composant primaire.

Le système de génération d'hystérésis exerce par exemple sur le composant secondaire un couple compris entre 0, 1 Nm et 2 Nm, la valeur maximale de couple d'hystérésis étant obtenue lorsque le composant secondaire tourne par rapport au composant primaire d'une valeur angulaire égale à l'amplitude de son mouvement de rotation.

Le couple d'hystérésis exercé peut être constant ou variable. Le couple d'hystérésis est par exemple d'abord variable puis constant lorsque le composant secondaire tourne par rapport au composant primaire.

Lorsque le couple d'hystérésis est non constant, le système de génération d'hystérésis peut mettre en œuvre au moins une rampe interagissant par frottement avec au moins une contre-rampe lors de la rotation du composant secondaire par rapport au composant primaire. La rampe peut être solidaire du composant primaire tandis que la contre-rampe est solidaire du composant secondaire. La rampe et la contre-rampe peuvent être axialement décalées.

La rampe et la contre-rampe peuvent présenter la même dimension angulaire.

Le couple d'hystérésis exercé lors de la rotation du composant secondaire par rapport au composant primaire peut d'abord être croissant puis constant. Dans ce but, la ou chaque rampe peut être adjacente à un plateau et la ou chaque contre-rampe peut également être adjacente à un plateau. Lorsqu'une rampe et une contre-rampe interagissent par frottement, un couple d'hystérésis croissant est exercé sur le composant secondaire, tandis que lorsque les deux plateaux interagissent par frottement, le couple d'hystérésis est constant.

La rampe peut être portée par le composant primaire, étant par exemple ménagée dans la surface de l'une des deux parties de ce composant primaire ou formée par un revêtement déposé sur la surface d'une partie du composant primaire.

Le cas échéant, plusieurs rampes se succédant angulairement peuvent être ménagées dans le composant primaire. Ces rampes peuvent toutes être de même forme.

La contre-rampe peut être ménagée dans une pièce distincte du composant secondaire mais solidaire en rotation, et le cas échéant également axialement, du composant secondaire.

La contre-rampe est par exemple portée par une pièce axialement décalée par rapport au composant secondaire et solidaire de ce composant secondaire, la pièce présentant une portion au contact du composant primaire. La pièce peut être élastiquement déformable. La pièce comprend par exemple une portion radialement extérieure solidaire du composant secondaire et une portion radialement intérieure en contact avec le composant primaire.

La portion radialement extérieure de la pièce s'étend par exemple de façon continue autour de l'axe de rotation, s'étendant notamment radialement entre un bord radialement intérieur circulaire et un bord radialement extérieur circulaire. La portion radialement intérieure de cette pièce peut comprendre une ou plusieurs poutres. Chaque poutre peut être en forme de U, lorsqu'observée dans un plan perpendiculaire à l'axe de rotation du dispositif. Chaque poutre présente alors deux bras, chaque bras prenant naissance sur le bord radialement intérieur de la portion radialement extérieure de la pièce, et les deux bras étant reliés par une partie de jonction qui porte alors la contre-rampe. Cette dernière peut être directement ménagée dans la partie de jonction ou formée via un revêtement déposé sur cette partie de jonction.

Le cas échéant, plusieurs contre-rampes se succédant angulairement peuvent être prévues dans ladite pièce. Ces contre-rampes peuvent toutes être de même forme.

Dans tout ce qui précède, le nombre de contre-rampes peut être égal au nombre de rampes. Ce nombre est par exemple compris entre deux et six, étant par exemple égal à quatre. Il y a alors quatre rampes et quatre contre-rampes.

Dans tout ce qui précède, chaque rampe peut faire saillie en direction de la contre rampe, présentant notamment un profil convexe tandis que chaque contre-rampe présente alors un profil concave. L'inverse est possible, chaque contre-rampe faisant alors saillie en direction de la rampe, chaque contre-rampe présentant notamment un profil convexe tandis que chaque rampe présente alors un profil concave.

Dans tout ce qui précède, la ou les rampes et la ou les contre-rampes peuvent être disposées radialement intérieurement par rapport au composant secondaire, c'est-à-dire qu'elles sont situées à une distance radiale de l'axe de rotation qui est inférieure à la distance radiale la plus petite entre le composant secondaire et l'axe de rotation.

Des trous peuvent être ménagés dans la portion radialement extérieure de la pièce, ces trous pouvant recevoir des moyens de solidarisation au composant secondaire, par exemple des rivets.

Les poutres peuvent être uniformément réparties autour de l'axe de rotation.

Dans tout ce qui précède, le dispositif d'amortissement peut être porté par un moyeu. Le composant primaire est par exemple solidaire, au moins en rotation, de ce moyeu.

Un limiteur de couple peut être prévu, ce dernier étant alors disposé de manière à exercer une force de frottement sur le dispositif d'amortissement, cette force maintenant le composant primaire du dispositif d'amortissement solidaire en rotation du moyeu tant que le couple exercé par ce dispositif sur le limiteur de couple est inférieur à une valeur prédéfinie.

Dans ce cas, tant que la force de frottement mentionnée ci-dessus maintient le composant primaire solidaire en rotation du moyeu, le composant secondaire peut osciller par rapport au composant primaire. Au-delà de la valeur de couple prédéfinie, le dispositif d'amortissement glisse par rapport au moyeu, dissipant ainsi l'énergie associée au couple qu'il subit. La valeur prédéfinie de couple au-delà de laquelle le glissement du dispositif d'amortissement se produit est par exemple comprise entre 4 Nm et 8 Nm, étant par exemple de l'ordre de 5 Nm.

Le limiteur de couple peut être disposé de manière à exercer une force de frottement uniquement radiale sur le dispositif d'amortissement. Le limiteur de couple peut alors être une rondelle disposée radialement entre le composant primaire du dispositif d'amortissement et le moyeu, et solidarisant ces derniers en rotation tant que le couple exercé par le dispositif d'amortissement sur le limiteur de couple est inférieur à la valeur prédéfinie. On évite ainsi de rajouter de l'encombrement axial au disque de friction. Une gorge ménagée dans le moyeu peut recevoir en tout ou partie le limiteur de couple.

Le limiteur de couple peut être formé par une rondelle élastiquement déformable. A l'état libre, cette rondelle peut présenter une forme proche d'un carré, cette forme étant modifiée lorsque la rondelle est introduite entre le moyeu et le dispositif d'amortissement. La rondelle peut alors présenter un forme ondulée, venant successivement en contact d'une part avec le moyeu, et d'autre part avec le composant primaire lorsque l'on se déplace circonférentiellement.

La rondelle peut être réalisée en acier ressort, par exemple en C67S. La rondelle élastique peut le cas échéant être fendue.

Un système de maintien axial du composant primaire du dispositif d'amortissement sur le moyeu peut être prévu. Ce système de maintien axial peut comprendre :
- un circlip monté sur le moyeu et formant une butée axiale pour le déplacement du composant primaire dans un premier sens selon la direction axiale, et/ou
- un épaulement ménagé dans le moyeu et formant une butée axiale pour le déplacement du composant primaire dans un deuxième sens selon la direction axiale.

Ce système de maintien axial peut ainsi permettre que le composant primaire soit immobilisé axialement.

Aucune des butées axiale pour le déplacement du dispositif d'amortissement ne fait par exemple intervenir un appui axial élastique, le dispositif n'étant par exemple pas en butée contre une pièce maintenue axialement par un accumulateur d'énergie tel qu'un ou plusieurs ressorts, contrairement à ce qui est enseigné par exemple dans la demande WO2011/060752 en référence à l'élément référencé (17) sur la figure 1 de cette demande.

En variante, le maintien axial du batteur peut se faire via le limiteur de couple. Ce dernier est alors disposé de manière à exercer une force de frottement uniquement radiale sur le dispositif d'amortissement. Le limiteur de couple coopère alors d'une part avec une ou plusieurs gorges ménagées dans le moyeu et avec une ou plusieurs gorges ménagées dans le composant primaire pour assurer le maintien axial du dispositif d'amortissement sur le moyeu. Ce maintien axial peut alors être uniquement assuré par le limiteur de couple, sans qu'il soit besoin de prévoir d'autres moyens de maintien axial complémentaires.

L'invention a encore pour objet, selon un autre de ses aspects, un disque de friction pour embrayage, comprenant :
- au moins une garniture de friction définissant une entrée en couple,
- un moyeu mobile en rotation autour de l'axe de rotation du composant secondaire, et définissant une sortie en couple,
- le dispositif d'amortissement tel que défini ci-dessus, étant porté par le moyeu et disposé hors du chemin emprunté par le couple transmis par le disque entre l'entrée en couple et la sortie en couple.

Le disque peut comprendre un limiteur de couple tel que mentionné ci-dessus et/ou un système de génération d'hystérésis tel que mentionné ci-dessus.

Le disque de friction peut être dépourvu de tout amortisseur d'oscillations de torsion autre que le dispositif d'amortissement ou « batteur » précité, auquel cas la ou les garnitures de friction sont solidaires du moyeu.

En variante, la ou les garniture(s) de friction sont mobiles en rotation par rapport au moyeu et un amortisseur d'oscillations de torsion, autre que le dispositif d'amortissement précité, est prévu et disposé entre la ou les garniture(s) de friction et le moyeu. Cet amortisseur d'oscillations de torsion s'oppose alors à la rotation de la ou des garnitures par rapport au moyeu. L'amortisseur d'oscillations de torsion comprend par exemple une pluralité de ressorts. Dans un tel cas, le limiteur de couple du disque de friction est de préférence un limiteur de couple agissant exclusivement radialement décrit ci-dessus.

L'invention pourra être mieux comprise à la lecture de la description qui va suivre d'un exemple non limitatif de mise en œuvre de celle-ci et à l'examen du dessin annexé sur lequel :
- la figure 1 est une vue d'un disque de friction comprenant un dispositif d'amortissement selon un exemple de mise en œuvre de l'invention,
- la figure 2 représente le dispositif d'amortissement de la figure 1 à l'état éclaté,
- la figure 3 représente le dispositif d'amortissement de la figure 2 assemblé, et
- la figure 4 représente un détail de la figure 3.

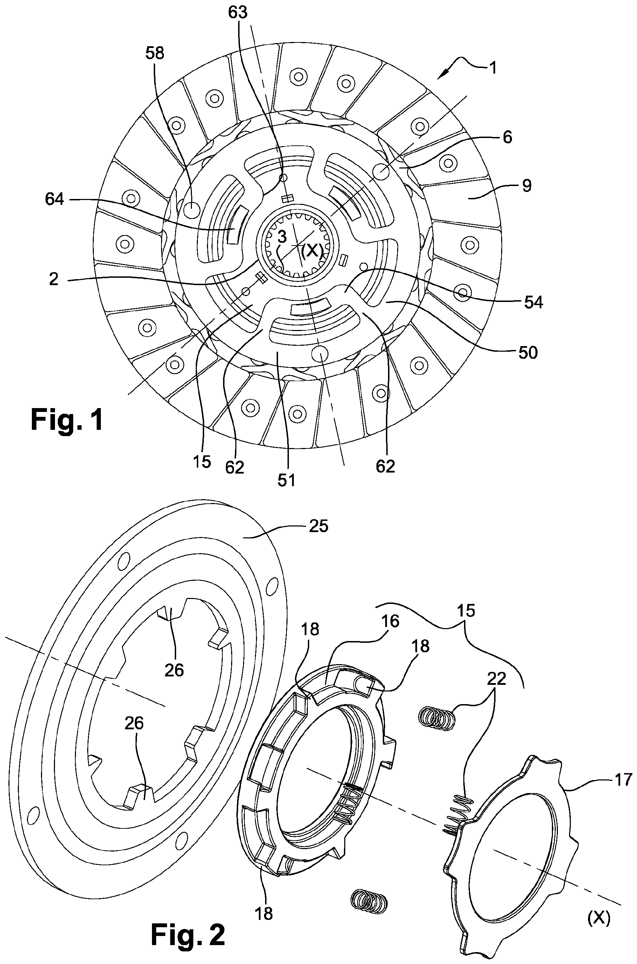

On a représenté sur la figure 1 en vue de face un disque de friction 1 pour embrayage d'un système de transmission de véhicule automobile. Ce disque de friction 1 comprend dans l'exemple considéré un moyeu 2 apte à entraîner en rotation autour d'un axe X un arbre non représenté d'une boîte de vitesses au moyen de cannelures 3.

Le disque de friction 1 comprend un support 6 de garnitures de friction. Le support 6 est dans l'exemple considéré en plusieurs parties. Il comprend un flasque s'étendant radialement depuis le moyeu 2 et une plaque supportant des garnitures de friction 9. La plaque est par exemple fixée sur le flasque par des rivets, non visibles sur la figure 1. Une pluralité de découpes de même forme et ménagées dans la plaque se succèdent par exemple autour de l'axe X.

Les garnitures de friction 9 définissent ainsi une entrée en couple pour le disque de friction tandis que le moyeu 2 définit une sortie en couple pour le disque 1.

Dans l'exemple décrit, le support 6 de garnitures de friction est ici solidaire du moyeu 2, c'est-à-dire que le disque 1 est dépourvu d'amortisseur d'oscillations de torsion disposé dans le chemin qu'emprunte le couple entre l'entrée et la sortie en couple dans le disque 1.

En variante, et bien que non représenté, un tel amortisseur d'oscillations de torsion disposé entre le moyeu 2 et le support 6 peut être présent, cet amortisseur comprenant par exemple une pluralité de ressorts permettant d'amortir une partie des oscillations de torsion entre les garnitures de friction 9 et le moyeu 2.

Le disque de friction 1 comprend encore un dispositif 14 d'amortissement des oscillations de torsion. Le dispositif 14 est ici un batteur, c'est-à-dire qu'il est situé hors du chemin emprunté par le couple que transmet le disque 1 depuis les garnitures de friction 9 jusqu'au moyeu 2, et qu'il comprend une fréquence de résonance fixe et indépendante de la vitesse de rotation du moteur thermique du véhicule. La fréquence de résonance du batteur 14 est dans l'exemple considéré comprise entre 8 Hz et 14 Hz.

Le batteur 14 comprend dans l'exemple considéré un composant primaire 15 disposé autour du moyeu 2.

Dans l'exemple décrit, le composant primaire 15 est réalisé en deux parties 16 et 17 qui sont solidarisées entre elles par encliquetage et qui se succèdent globalement axialement le long de l'axe X. La partie 16 du composant primaire 15 est celle qui est axialement la plus proche des garnitures de friction 9.

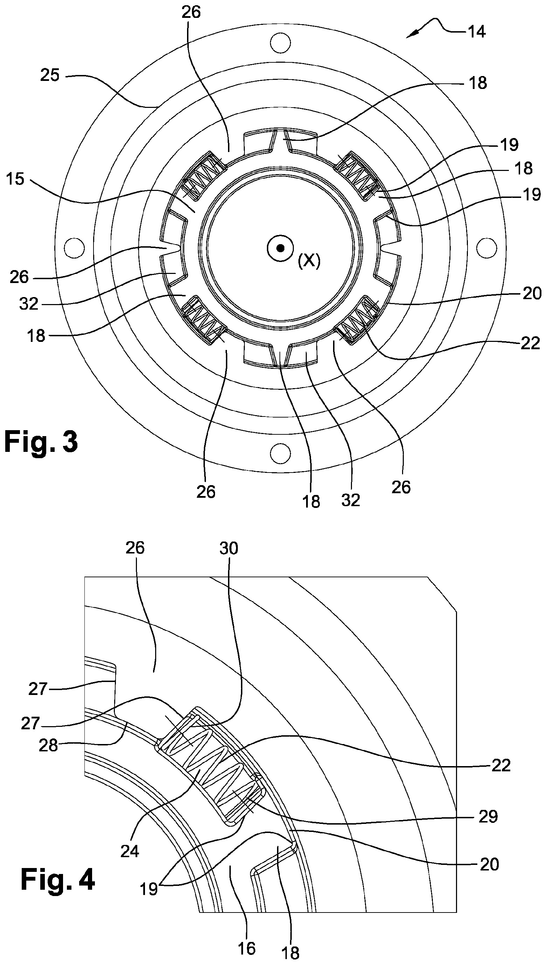

Comme on peut le voir sur les figures 2 et 3, le composant primaire 15 définit une pluralité de dents primaires 18 faisant radialement saillie vers l'extérieur. Ces dents primaires 18 sont ici définies par la partie 16 du composant primaire 15. Six dents primaires 18 sont définies par le composant primaire 15 dans l'exemple décrit. Chaque dent primaire 18 présente, dans un plan perpendiculaire à l'axe X, deux parois 19 s'étendant sensiblement radialement, ces parois étant notamment planes, ces deux parois étant reliées par une paroi 20 s'étendant orthoradialement.

Le batteur 14 comprend encore des organes de rappel élastique 22. Ces organes de rappel élastique 22 sont montés en parallèle les uns les autres et interposés entre le composant primaire 15 et un composant secondaire 25. Chaque organe de rappel élastique 22 est ici un ressort hélicoïdal droit. Seulement quatre organes de rappel élastique 22 sont prévus dans l'exemple décrit, deux organes de rappel élastique se succédant circonférentiellement étant décalés d'un angle mesuré depuis l'axe de rotation sensiblement égal à 90°. Le ressort unique modélisant l'ensemble des ressorts 22 du batteur 14 présente par exemple un coefficient de raideur angulaire compris entre 0.02 Nm/° à 0.15Nm/°.

Le composant secondaire 25 forme une masse de filtrage. Comme représenté sur les figures, le composant secondaire 25 s'étend majoritairement radialement extérieurement par rapport au composant primaire 15. Le composant secondaire 25 définit une masse qui présente par exemple un moment d'inertie compris entre 0.0005 et 0.002 kg.m².

Le composant secondaire 25 est mobile en rotation par rapport au composant primaire 15 autour de l'axe X, les ressorts 22 s'opposant à cette rotation du composant secondaire 25 par rapport au composant primaire 15 en en limitant le débattement. L'amplitude de rotation du composant secondaire 25 par rapport au composant primaire 15 est dans l'exemple considéré comprise entre 14° et 18°.

On constate également sur les figures 2 et 3 que le composant secondaire 25 définit des dents secondaires 26 faisant chacune saillie radialement vers l'intérieur. Six dents secondaires 26 sont définies par le composant primaire 25 dans l'exemple décrit. Chaque dent secondaire 26 présente, dans un plan perpendiculaire à l'axe X, deux parois 27 s'étendant sensiblement radialement, ces parois étant notamment planes, ces deux parois 27 étant reliées par une paroi 28 s'étendant orthoradialement.

Chaque ressort 22 présente une extrémité primaire 29 en appui contre une dent primaire 18 et une extrémité secondaire 30 en appui contre une dent secondaire 26. On constate que cet appui est ici exercé directement par une dent primaire 18, respectivement une dent secondaire 26, via une paroi plane 19 ou 27 de ladite dent.

Chaque ressort 22 s'étend ainsi dans un logement 24 dont une extrémité circonférentielle est définie par la dent primaire 18 en appui contre son extrémité primaire 29 et dont l'autre extrémité circonférentielle est définie par la dent secondaire 26 en appui contre son extrémité secondaire 30.

On constate sur la figure 3 que deux ressorts 22 se succédant circonférentiellement sont positionnés de façon inversée. Ainsi, pour l'un de ces deux ressorts 22 l'extrémité primaire 29 est l'extrémité dans le sens trigonométrique et l'extrémité secondaire 30 est l'extrémité dans le sens non-trigonométrique, alors que pour l'autre de ces deux ressorts 22, l'extrémité primaire 29 est l'extrémité dans le sens non-trigonométrique et l'extrémité secondaire 30 est l'extrémité dans le sens trigonométrique.

Comme on va maintenant le voir, le batteur 14 des exemples décrits comprend en réalité deux types de deux primaires 18 et deux types de dents secondaires 26.

Le premier type de dents primaires 18 interagit avec un unique ressort 22 et le premier type de dents secondaires 26 interagit avec un unique ressort 22. Chaque logement 24 est ainsi défini entre une dent primaire 18 du premier type et une dent secondaire 26 du premier type.

Les dents primaires 18 selon le deuxième type et les dents secondaires 26 selon le deuxième type n'interagissent dans l'exemple décrit avec aucun ressort 22. Les dents primaires 18, respectivement les dents secondaires 26, selon le deuxième type ont ici une forme plus effilée que les dents primaires 18, respectivement les dents secondaires 26, selon le premier type. L'angle formé entre les parois 19, respectivement 27, peut être plus faible, et la dimension angulaire de la paroi 20, respectivement 28, peut aussi être plus faible pour les dents primaires 18, respectivement secondaires 26, du deuxième type.

Chaque dent primaire du deuxième type 18 est disposée dans un logement 32 ménagé entre deux dents secondaires 26 du premier type, et chaque dent secondaire 26 du deuxième type est disposée dans un logement 32 ménagé entre deux dents primaires 18 du premier type.

Dans l'exemple considéré, chaque dent primaire du deuxième type 18 et chaque dent secondaire 26 du deuxième type forment un organe de butée pour le déplacement en rotation du composant secondaire 25 par rapport au composant primaire 15 en rotation autour de l'axe X.

Plus précisément, chaque dent primaire 18 du deuxième type vient dans cet exemple en appui contre l'extrémité dans le sens trigonométrique du logement 32 pour définir une position de butée pour le déplacement dans le sens non-trigonométrique du composant secondaire 25 par rapport au composant primaire 15, et cette dent primaire 18 du deuxième type vient en appui contre l'extrémité dans le sens non-trigonométrique du logement 32 pour définir une position de butée pour le déplacement dans le sens trigonométrique du composant secondaire 25 par rapport au composant primaire 15.

Similairement, chaque dent secondaire 25 du deuxième type vient en appui contre l'extrémité dans le sens trigonométrique du logement 32 pour définir une position de butée pour le déplacement dans le sens trigonométrique du composant secondaire 25 par rapport au composant primaire 15, et cette dent secondaire 25 du deuxième type vient en appui contre l'extrémité dans le sens non-trigonométrique du logement 32 pour définir une position de butée pour le déplacement dans le sens non-trigonométrique du composant secondaire 25 par rapport au composant primaire 15.

On constate ainsi en se déplaçant sur la figure 3 circonférentiellement le long d'un même pourtour que l'on croise une alternance de logement 24 recevant un ressort 22 et de logement 32 dépourvu de ressort et recevant une dent primaire 18 du deuxième type ou une dent secondaire 26 du deuxième type, ces logements 24 et 32 occupant une même position radiale.

Le batteur 14 comprend encore dans l'exemple décrit un système de génération d'hystérésis pour le déplacement du composant secondaire 25 par rapport au composant primaire 15. Ce système de génération d'hystérésis met entre autres en œuvre une pièce élastiquement déformable 50 qui va maintenant être décrite.

Cette pièce élastiquement déformable 50 est solidaire du composant secondaire 25 et elle comprend comme on peut le voir sur la figure 1 :
- une portion radialement extérieure 51 en forme de rondelle s'étendant continument autour de l'axe X, et
- une portion radialement intérieure 54 s'étendant de façon discontinue autour de l'axe X.

La portion radialement intérieure 54 comprend ici plusieurs poutres faisant saillie radialement vers l'intérieur, c'est-à-dire vers l'axe X, depuis la portion radialement extérieure 51 de la rondelle 50. Dans l'exemple décrit, trois poutres sont réparties uniformément autour de l'axe X.

La pièce 50 vient en appui, par sa portion radialement intérieure 54 via les poutres, contre le composant primaire 15 du batteur 14.Comme on peut le voir sur la figure 1, la portion radialement extérieure 51 de la rondelle 50 présente dans l'exemple considéré un bord radialement extérieur circulaire et un bord radialement intérieur circulaire. Une pluralité de trous 58 sont ménagés dans cette portion 51 au niveau de chaque poutre. Chacun de ces trous 58 reçoit un moyen de solidarisation de la rondelle 50 au composant secondaire 25 du batteur 14, chaque moyen de solidarisation étant par exemple un rivet.

Comme représenté, chaque poutre peut présenter, lorsqu'observée parallèlement à l'axe X, une forme de U. Chaque poutre présente alors deux bras 62, chaque bras 62 prenant naissance sur le bord radialement intérieur de la portion radialement extérieure 51 de la pièce 50, et les deux bras 62 étant reliés par une partie de jonction 63 qui porte alors une contre-rampe 64. Cette dernière peut être directement ménagée dans la partie de jonction 63 ou être formée via un revêtement déposé sur cette partie de jonction. Chaque partie de jonction 63 porte ainsi une contre-rampe 64, de sorte que trois contre-rampes sont portées par la pièce 50 dans l'exemple décrit.

Ces contre-rampes 64 interagissent avec des rampes qui sont par exemple ménagées sur la surface de la partie 17 du composant primaire 15 en regard de la pièce 50. Trois rampes sont par exemple prévues.

On va maintenant décrire la façon dont un couple d'hystérésis variable peut être généré par le système de génération d'hystérésis lors de la rotation du composant secondaire 25 par rapport au composant primaire 15 du batteur 14.

Lors de la rotation du composant secondaire 25 du batteur 14 par rapport au composant primaire 15, le composant primaire 15 exerce sur le composant secondaire 25, via les rampes qui vont déformer les contre-rampes 64 de la pièce 50 solidaire du composant secondaire 25, un couple de frottement ou d'hystérésis variable. Les formes des rampes et des contre-rampes sont par exemple choisies de manière à ce que le couple d'hystérésis soit maximal lorsque le composant secondaire 25 se déplace par rapport au composant primaire 15 selon son amplitude de rotation. Cette valeur maximale de couple d'hystérésis est par exemple de l'ordre de 2 Nm.

L'invention n'est pas limitée à l'exemple qui vient d'être décrit.

Le batteur 14 selon l'invention peut également être associé à d'autres composants d'un système de transmission qu'un disque de friction pour embrayage, par exemple à un convertisseur de couple hydrodynamique ou un double volant amortisseur ou une inertie primaire tel qu'un volant, ou encore à un double embrayage à sec ou humide, à un simple embrayage humide ou encore à un composant de groupe motopropulseur hybride.

## Revendications

1. Dispositif d'amortissement (14) à fréquence de résonance fixe, le dispositif (14) étant apte à être intégré dans un composant (1) d'un système de transmission de véhicule de manière à être disposé hors du chemin emprunté par le couple transmis par ledit composant, le dispositif (14) comprenant:
- un composant primaire (15) définissant une pluralité de dents primaires (18) faisant radialement saillie vers l'extérieur,
- un composant secondaire (25), mobile en rotation autour d'un axe (X) par rapport au composant primaire (15) contre une force de rappel élastique, et définissant une pluralité de dents secondaires (26) faisant radialement saillie vers l'intérieur,
- une pluralité d'organes de rappel élastique (22) exerçant la force de rappel élastique, chaque organe de rappel élastique présentant une extrémité primaire (29) en appui contre une dent primaire (18) et une extrémité secondaire (30) en appui contre une dent secondaire (26), le dispositif d'amortissement étant **caractérisé en ce que** chaque dent primaire (18) et chaque dent secondaire (26) interagissent avec au plus un organe de rappel élastique (22).

2. Dispositif selon la revendication 1, le composant primaire (15) définissant des dents primaires (18) interagissant avec un seul organe de rappel élastique (22) et des dents primaires (18) n'interagissant avec aucun organe de rappel élastique (22), le composant secondaire (25) définissant des dents secondaires (26) interagissant avec un seul organe de rappel élastique (22) et des dents secondaires (26) n'interagissant avec aucun organe de rappel élastique (22).

3. Dispositif selon la revendication 2, chaque dent primaire (18) n'interagissant avec aucun organe de rappel élastique étant disposée dans un logement (32) dont chaque extrémité circonférentielle est définie par une dent secondaire (18) interagissant avec un seul organe de rappel élastique (22).

4. Dispositif selon la revendication 3, ledit logement (32) et ladite dent primaire (18) étant configurés de manière à ce que cette dent primaire (18) puisse venir en appui contre au moins une extrémité circonférentielle du logement (32) de manière à définir une position de butée pour le déplacement du composant secondaire (25) par rapport au composant primaire (15).

5. Dispositif selon l'une quelconque des revendications 2 à 4, chaque dent secondaire (26) n'interagissant avec aucun organe de rappel élastique étant disposée dans un logement (32) dont chaque extrémité circonférentielle est définie par une dent primaire (18) interagissant avec un seul organe de rappel élastique (22).

6. Dispositif selon la revendication 5, ledit logement (32) et ladite dent secondaire (26) étant configurés de manière à ce que cette dent secondaire (26) puisse venir en appui contre au moins une extrémité circonférentielle du logement (32) de manière à définir une position de butée pour le déplacement du composant secondaire (25) par rapport au composant primaire (15).

7. Dispositif selon l'une quelconque des revendications 2 à 6, chaque dent primaire (18) n'interagissant avec aucun organe de rappel élastique et chaque dent secondaire (26) n'interagissant avec aucun organe de rappel élastique s'étendant au moins partiellement dans l'espace radial dans lequel s'étend chaque organe de rappel élastique (22).

8. Dispositif selon l'une quelconque des revendications précédentes, les organes de rappel élastique (22) étant disposés de telle sorte que l'on observe en se déplaçant circonférentiellement autour de l'axe de rotation en alternance :
- un organe de rappel élastique (22) dont l'extrémité dans le sens trigonométrique est en appui contre une dent primaire (18) et dont l'extrémité dans le sens non-trigonométrique est en appui contre une dent secondaire (26), et
- un organe de rappel élastique (22) dont l'extrémité dans le sens non-trigonométrique est en appui contre une dent primaire (18) et dont l'extrémité dans le sens trigonométrique est en appui contre une dent secondaire (26).

9. Dispositif selon l'une quelconque des revendications précédentes, ne comprenant que quatre organes de rappel élastique (22), deux organes de rappel élastique se succédant circonférentiellement étant décalés d'un angle mesuré depuis l'axe de rotation (X) sensiblement égal à 90°.

10. Dispositif selon l'une quelconque des revendications précédentes, chaque organe (22) de rappel élastique s'étendant circonférentiellement entre son extrémité primaire (29) et son extrémité secondaire (30).

11. Disque de friction (1) pour embrayage, comprenant :
- au moins une garniture de friction (9) définissant une entrée en couple,
- un moyeu (2), et définissant une sortie en couple,
- le dispositif d'amortissement (14) selon l'une quelconque des revendications précédentes, étant porté par le moyeu (2) et disposé hors du chemin emprunté par le couple transmis par le disque (1) entre l'entrée en couple et la sortie en couple,
le moyeu (2) étant mobile en rotation autour de l'axe (X) de rotation du composant secondaire (25).

## Patentansprüche

1. Dämpfungsvorrichtung (14) mit fester Resonanzfrequenz, wobei die Vorrichtung (14) so in ein Bauteil (1) eines Fahrzeug-Getriebesystems eingebaut werden kann, dass sie außerhalb des Wegs angeordnet ist, der von dem vom Bauteil übertragenen Drehmoment benutzt wird, wobei die Vorrichtung (14) enthält:
- ein Primärbauteil (15), das eine Vielzahl von Primärzähnen (18) definiert, die radial nach außen vorstehen,
- ein Sekundärbauteil (25), das um eine Achse (X) bezüglich des Primärbauteils (15) gegen eine elastische Rückstellkraft drehbeweglich ist und eine Vielzahl von Sekundärzähnen (26) definiert, die radial nach innen vorstehen,
- eine Vielzahl elastischer Rückstellelemente (22), die die elastische Rückstellkraft ausüben, wobei jedes elastische Rückstellelement ein Primärende (29) in Auflage gegen einen Primärzahn (18) und ein Sekundärende (30) in Auflage gegen einen Sekundärzahn (26) aufweist,
wobei die Dämpfungsvorrichtung **dadurch gekennzeichnet ist, dass** jeder Primärzahn (18) und jeder Sekundärzahn (26) mit höchstens einem elastischen Rückstellelement (22) interagieren.

2. Vorrichtung nach Anspruch 1, wobei das Primärbauteil (15) Primärzähne (18), die mit einem einzigen elastischen Rückstellelement (22) interagieren, und Primärzähne (18) definiert, die mit keinem elastischen Rückstellelement (22) interagieren, wobei das Sekundärbauteil (25) Sekundärzähne (26), die mit einem einzigen elastischen Rückstellelement (22) interagieren, und Sekundärzähne (26) definiert, die mit keinem elastischen Rückstellelement (22) interagieren.

3. Vorrichtung nach Anspruch 2, wobei jeder Primärzahn (18), der mit keinem elastischen Rückstellelement interagiert, in einer Aufnahme (32) angeordnet ist, von der jedes Umfangsende durch einen Sekundärzahn (18) definiert wird, der mit einem einzigen elastischen Rückstellelement (22) interagiert.

4. Vorrichtung nach Anspruch 3, wobei die Aufnahme (32) und der Primärzahn (18) so konfiguriert sind, dass dieser Primärzahn (18) gegen mindestens ein Umfangsende der Aufnahme (32) in Auflage kommen kann, um eine Anschlagstellung für die Verschiebung des Sekundärbauteils (25) bezüglich des Primärbauteils (15) zu definieren.

5. Vorrichtung nach einem der Ansprüche 2 bis 4, wobei jeder Sekundärzahn (26), der mit keinem elastischen Rückstellelement interagiert, in einer Aufnahme (32) angeordnet ist, von der jedes Umfangsende von einem Primärzahn (18) definiert wird, der mit einem einzigen elastischen Rückstellelement (22) interagiert.

6. Vorrichtung nach Anspruch 5, wobei die Aufnahme (32) und der Sekundärzahn (26) so konfiguriert sind, dass dieser Sekundärzahn (26) gegen mindestens ein Umfangsende der Aufnahme (32) in Auflage kommen kann, um eine Anschlagstellung für die Verschiebung des Sekundärbauteils (25) bezüglich des Primärbauteils (15) zu definieren.

7. Vorrichtung nach einem der Ansprüche 2 bis 6, wobei jeder Primärzahn (18), der mit keinem elastischen Rückstellelement interagiert, und jeder Sekundärzahn (26), der mit keinem elastischen Rückstellelement interagiert, sich zumindest teilweise in dem radialen Raum erstreckt, in dem sich jedes elastische Rückstellelement (22) erstreckt.

8. Vorrichtung nach einem der vorhergehenden Ansprüche, wobei die elastischen Rückstellelemente (22) so angeordnet sind, dass man bei einer Bewegung am Umfang um die Drehachse abwechselnd beobachtet:
- ein elastisches Rückstellelement (22), dessen Ende in trigonometrischer Richtung gegen einen Primärzahn (18) anliegt, und dessen Ende in nicht-trigonometrischer Richtung gegen einen Sekundärzahn (26) anliegt, und
- ein elastisches Rückstellelement (22), dessen Ende in nicht-trigonometrischer Richtung gegen einen Primärzahn (18) anliegt, und dessen Ende in trigonometrischer Richtung gegen einen Sekundärzahn (26) anliegt.

9. Vorrichtung nach einem der vorhergehenden Ansprüche, die nur vier elastische Rückstellelemente (22) enthält, wobei zwei in Umfangsrichtung aufeinander folgende elastische Rückstellelemente um einen Winkel gemessen von der Drehachse (X) im Wesentlichen gleich 90° versetzt sind.

10. Vorrichtung nach einem der vorhergehenden Ansprüche, wobei jedes elastische Rückstellelement (22) sich in Umfangsrichtung zwischen seinem Primärende (29) und seinem Sekundärende (30) erstreckt.

11. Kupplungsreibscheibe (1), die enthält:
- mindestens einen Reibbelag (9), der einen Drehmomenteintritt definiert,
- eine Nabe (2), und die einen Drehmomentaustritt definiert,
- wobei die Dämpfungsvorrichtung (14) nach einem der vorhergehenden Ansprüche von der Nabe (2) getragen wird und außerhalb des Wegs angeordnet ist, der von dem von der Scheibe (1) übertragenen Drehmoment zwischen dem Drehmomenteintritt und dem Drehmomentaustritt benutzt wird,
wobei die Nabe (2) um die Drehachse (X) des Sekundärbauteils (25) drehbeweglich ist.

## Claims

1. Damping device (14) having a fixed resonant frequency, the device (14) being able to be integrated into a component (1) of a vehicle transmission system so as to be arranged outside the path taken by the torque transmitted by said component, the device (14) comprising:
- a primary component (15) defining a plurality of primary teeth (18) which project radially outwards,
- a secondary component (25) that is able to rotate about an axis (X) relative to the primary component (15) counter to an elastic return force, and that defines a plurality of secondary teeth (26) which project radially inwards,
- a plurality of elastic return members (22) exerting the elastic return force, each elastic return member having a primary end (29) that bears against a primary tooth (18) and a secondary end (30) that bears against a secondary tooth (26),
the damping device being **characterized in that** each primary tooth (18) and each secondary tooth interact with at most one elastic return member (22).

2. Device according to Claim 1, the primary component (15) defining primary teeth (18) that interact with a single elastic return member (22) and primary teeth (18) that do not interact with any elastic return member (22), the secondary component (25) defining secondary teeth (26) that interact with a single elastic return member (22) and secondary teeth (26) that do not interact with any elastic return member (22) .

3. Device according to Claim 2, wherein each primary tooth (18) that does not interact with any elastic return member is arranged in a recess (32) of which each circumferential end is defined by a secondary tooth (18) that interacts with a single elastic return member (22).

4. Device according to Claim 3, said recess (32) and said primary tooth (18) being configured such that this primary tooth (18) can come to bear against at least one circumferential end of the recess (32) so as to define a stop position for the displacement of the secondary component (25) with respect to the primary component (15).

5. Device according to any one of Claims 2 to 4, wherein each secondary tooth (26) that does not interact with any elastic return member is arranged in a recess (32) of which each circumferential end is defined by a primary tooth (18) that interacts with a single elastic return member (22).

6. Device according to Claim 5, said recess (32) and said secondary tooth (26) being configured such that this secondary tooth (26) can come to bear against at least one circumferential end of the recess (32) so as to define a stop position for the displacement of the secondary component (25) with respect to the primary component (15).

7. Device according to any one of Claims 2 to 6, wherein each primary tooth (18) that does not interact with any elastic return member and each secondary tooth (26) that does not interact with any elastic return member extend at least partially into the radial space into which each elastic return member (22) extends.

8. Device according to any one of the preceding claims, the elastic return members (22) being arranged such that the following are found in alternating circumferential sequence around the axis of rotation:
- an elastic return member (22) whose end in the trigonometric sense bears against a primary tooth (18) and whose end in the non-trigonometric sense bears against a secondary tooth (26), and
- an elastic return member (22) whose end in the non-trigonometric sense bears against a primary tooth (18) and whose end in the trigonometric sense bears against a secondary tooth (26)

9. Device according to any one of the preceding claims, comprising only four elastic return members (22), wherein two circumferentially successive elastic return members are offset by an angle, measured from the axis of rotation (X), essentially equal to 90°.

10. Device according to any one of the preceding claims, wherein each elastic return member (22) extends circumferentially between its primary end (29) and its secondary end (30).

11. Friction disc (1) for a clutch, comprising:
- at least one friction lining (9) defining a torque input,
- a hub (2), and defining a torque output,
- the damping device (14) according to any one of the preceding claims, this being borne by the hub (2) and arranged outside the path taken by the torque transmitted by the disc (1) between the torque input and torque output,
the hub (2) being able to move in rotation about the axis of rotation (X) of the secondary component (25).
